Europäisches Patentamt

European Patent Office

Office européen des brevets

(19)

(11) Veröffentlichungsnummer: **0 282 779 B1**

(12) # EUROPÄISCHE PATENTSCHRIFT

(45) Veröffentlichungstag der Patentschrift: **30.12.92**

(51) Int. Cl.⁵: **G11B 27/02**, G11B 27/30

(21) Anmeldenummer: **88102685.0**

(22) Anmeldetag: **24.02.88**

(54) **Verfahren und Vorrichtung zum Bearbeiten von Folgen von Werten, die auf einem Aufzeichnungsträger aufgezeichnet sind.**

(30) Priorität: **13.03.87 CH 987/87**

(43) Veröffentlichungstag der Anmeldung:
**21.09.88 Patentblatt 88/38**

(45) Bekanntmachung des Hinweises auf die
Patenterteilung:
**30.12.92 Patentblatt 92/53**

(84) Benannte Vertragsstaaten:
**CH DE FR GB IT LI**

(56) Entgegenhaltungen:
**EP-A- 0 017 803     EP-A- 0 142 616
WO-A-87/00958     DE-A- 1 499 757
US-A- 4 211 997     US-A- 4 351 007**

(73) Patentinhaber: **STUDER REVOX AG
Althardstrasse 30
CH-8105 Regensdorf ZH(CH)**

(72) Erfinder: **Pelloni, Daniele, Dr.
Naglerwiesenstrasse 88
CH-8049 Zürich(CH)**
Erfinder: **Rüegg, Alex
Südbahnweg 4
CH-5200 Windisch(CH)**
Erfinder: **Nai, Marco
alla Cascata
CH-6595 Riazzino(CH)**

**Beschreibung**

Die Erfindung betrifft ein Verfahren und eine Vorrichtung zum Aneinanderfügen von zwei digitalisierten Audiosignalen, die als erste und zweite Folgen von Werten auf je einem Aufzeichnungsträger aufgezeichnet sind, unter Verwendung eines Zwischenspeichers.

Ein solches Verfahren ist beispielsweise aus der EP-A-017803 bereits bekannt. Dabei werden die beiden Folgen zusammen mit ihren Zeitcodewerten in je einen Zwischenspeicher eingelesen und dort abgetastet, bis eine störsignalfreie Schnitt- bzw. Ueberblendstelle ermittelt ist. In diesem Bereiche wird dann eine Ueberblendung zwischen den Folgen ausgelöst, die durch die Zeitcodesignale gesteuert wird.

Der Nachteil dieses Verfahrens besteht darin, dass den Werten der Folgen Zeitcodesignale beigegeben werden müssen, mit denen eine Stelle nicht auf ein Wort genau gekennzeichnet werden kann und dass damit kein scharfer Uebergang zwischen beiden Folgen erreichbar ist bei dem keine Datenwörter verloren gehen.

Ein weiteres Verfahren zum Editieren von digitalen Audiosignalen ist aus der US-A-4,351,007 bekannt. Auch hier werden bestimmte Stellen auf einer zusätzlichen Spur markiert. Die akustischen Signale im Bereiche dieser Stellen werden weiter überprüft, bis die geeignetste Stelle gefunden ist, wo vom einen Signal auf das andere Signal umgeschaltet werden kann.

Auch für dieses Verfahren gelten dieselben Nachteile wie für das zuerst beschriebene Verfahren.

Aus der WO 87/00958 ist ferner ein Verfahren bekannt mit dem bestimmte Stellen auf einem Band, das analog aufgezeichnete Videosignale enthält, wiedergefunden werden können. Dazu wird an ausgewählten Stellen die Helligkeit gemessen und gespeichert. Werden solche Helligkeitsmuster beim Lesen des Bandes entdeckt, so glaubt man die Stelle wieder gefunden zu haben. Ein auf digitalisierte Daten zugeschnittenes Verfahren zum Auffinden von Daten wird auch von J. Schieb in MS-DOS,1986, S.79 beschreiben, doch lassen sich mit beiden Verfahren keine wortgenauen Uebergänge zwischen Wörtern eines digitalisierten Signales ausführen.

Die Erfindung wie sie im Patentanspruch 1 gekennzeichnet ist, löst die Aufgabe, ein Verfahren und eine Vorrichtung zu schaffen, mit denen digitalisierte Audiosignale genau aneinandergefugt werden können, so dass keine Leerräume entstehen und keine Datenwörter verloren gehen.

Die durch die Erfindung erreichten Vorteile sind im wesentlichen darin zu sehen, dass es damit möglich ist, zwei Folgen von Abtastwerten genau an einem bestimmten Abtastwert oder zwischen bestimmten Abtastwerten zusammenzusetzen. Dadurch lässt sich am Uebergang der beiden Folgen das zweimalige Auftreten desselben Wertes vermeiden. Ein präziser Uebergang kann somit erreicht werden.

Im folgenden wird die Erfindung arhand von lediglich einen Ausfuehrungsweg darstellenden Zeichnungen naeher erlaeutert. Es zeigt jeweils in schematischer Darstellung:

Figur 1 eine Folge von Werten mit Teilfolgen,

Figur 2 zwei Folgen von Werten mit Teilfolgen und Abschnitten,

Figur 3 mehrere Schritte beim Editieren mit zwei Folgen,

Figur 4 eine Anordnung mit zwei Aufzeichnungstraegern fuer zwei Folgen,

Figur 5 ein Beispiel fuer einen Aufbau einer erfindungsgemaessen Vorrichtung,

Figur 6 einen Teil des Aufbaues gemaess Figur 5,

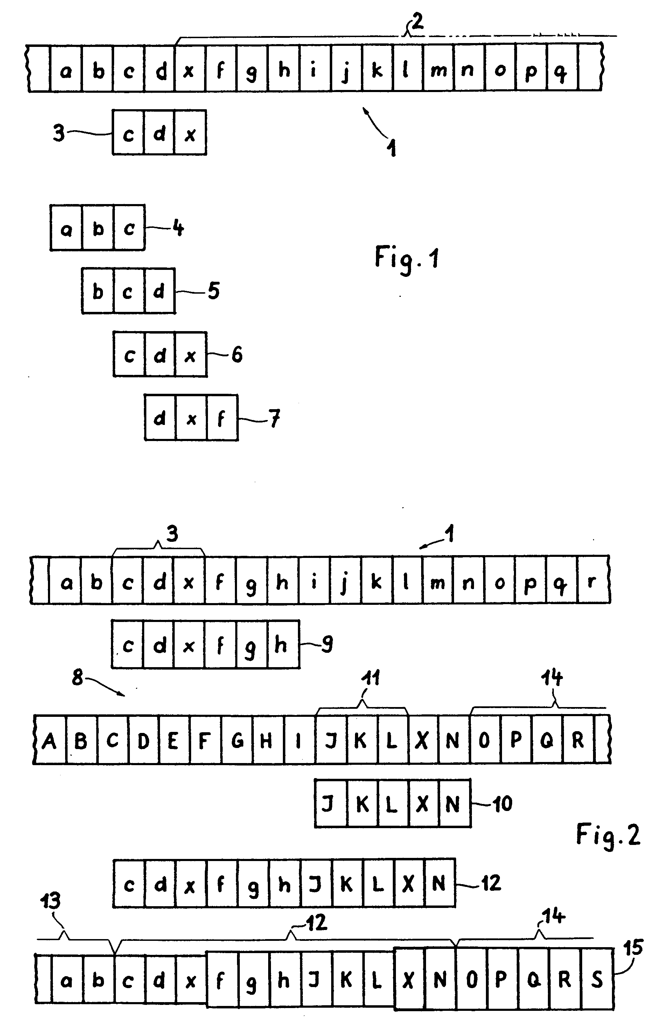

In Figur 1 ist eine Folge 1 von Werten dargestellt, wie sie beispielsweise auf einem nicht naeher dargestellten aber an sich bekannten Aufzeichnungstraeger aufgezeichnet ist. Die einzelnen Werte, die beispielsweise den Wert der Amplitude eines Audio-Signales zu einer bestimmten Zeit darstellen, sind mit Buchstaben a, b, c, d, x, f, g, h, i, j, k, l, m, n, o, p, q, usw bezeichnet. Eine Klammer 2 gibt an, welcher Teil der Folge 1 beispielsweise zu bearbeiten sei. Der Teil 2 beginnt mit dem Wert x. Man erkennt eine erste Teilfolge 3 mit den Werten c, d und x. Je eine weitere Teilfolge 4 mit Werten a, b und c, 5 mit Werten b, c und d, 6 mit Werten c, d und x und 7 mit Werten d, x und f ist ersichtlich. Die weiteren Teilfolgen 4, 5, 6 und 7 sind dazu bestimmt, mit der ersten Teilfolge 3 verglichen zu werden.

Bei der Bearbeitung der Folge 1 kann es beispielsweise darum gehen, laengs dieser Folge 1 eine bestimmte Stelle oder einen bestimmten Wert zu markieren. Angenommen dieser Wert sei der Wert x, so bildet man um diesen Wert x eine erste Teilfolge 3 und speichert diese. Will man nachfolgend diesen Wert x in der Folge 1 wieder finden, so wird die ganze Folge 1 oder mindestens derjenige Teil davon, in welchem man den gesuchten Wert x vermutet, in einen Speicher eingelesen und dort in weitere Teilfolgen 4, 5, 6, 7 usw zerlegt, die vorzugsweise gleichviele Werte aufweisen wie die erste Teilfolge 3. Dann wird jede weitere Teilfolge 4, 5, 6, 7 usw mit der ersten Teilfolge 3 verglichen. Dies geschieht in an sich bekannter Weise dadurch, dass z.B. der erste Wert a der Teilfolge 4 mit dem ersten Wert c der Teilfolge 3, dass der zweite Wert b der Teilfolge 4 mit dem zweiten Wert d der Teilfolge 3 und dass der dritte Wert c der Teilfolge 4 mit dem dritten Wert x der Teilfolge 3 verglichen wird. Sind alle drei Werte gleich, so sind

EP 0 282 779 B1

die beiden Teilfolgen identisch. Stimmen zwei Teilfolgen bei diesem Vergleich ueberein, so hat man die gesuchte Stelle wiedergefunden, denn man hat ja gerade die Teilfolge gelesen und der Lesekopf ist an deren Ende laengs des Aufzeichnungstraegers angelangt.

In Figur 2 ist ausser der ersten Folge 1 eine zweite Folge 8 mit Werten A, B, C, D, E, F, G, H, I, J, K, L, X, N, O, P, Q, R usw dargestellt. Ein Abschnitt 9 der Folge 1 mit Werten c, d, x, f, g und h sowie ein Abschnitt 10 der Folge 8 mit Werten J, K, L, X und N sind vorgesehen. Der Abschnitt 9 enthaelt die erste Teilfolge 3 und der Abschnitt 10 enthaelt eine zweite Teilfolge 11 der Folge 8 mit den Werten, J, K und L. Ein dritter Abschnitt 12 ist aus den beiden Abschnitten 9 und 10 zusammengesetzt. Mit 15 ist eine Folge bezeichnet, die durch Aneinanderfuegen von Teilen 13 und 14 der Folgen 1 und 8 ueber den Abschnitt 12 entstanden ist.

Bei der Bearbeitung der Folgen 1 und 8, kann es beispielsweise darum gehen, einen Teil der ersten Folge 1, der beispielsweise mit dem Wert h endet, mit einem Teil der zweiten Folge 8, der beispielsweise mit dem Wert J beginnt, zusammenzufuegen. Dabei muss darauf geachtet werden, dass einerseits kein einziger Wert verloren geht und dass andererseits kein leerer Raum zwischen den Teilen auftritt. Um dies zu gewaehrleisten wird in beiden Teilen der Folgen 1 und 8, die zusammengefuegt werden sollen, je ein Wert auf nun bekannte Weise markiert. Das sind in unserem Beispiel die Werte x und X. Ein erster Abschnitt 9, der die Werte x und h enthaelt wird aus der Folge 1 gebildet. Ein zweiter Abschnitt 10, der die Werte X und J enthaelt wird aus der zweiten Folge 8 gebildet. Ausserhalb der Folgen, beispielsweise in einem Speicher, werden die beiden Abschnitte 9 und 10 in an sich bekannter Weise so zusammengefuegt, dass die Werte h und J lueckenlos aufeinanderfolgen. So entsteht der dritte Abschnitt 12. Nun wird der dritte Abschnitt 12 so an die erste Folge 1 angehaengt, dass der Wert x aus der Folge 1 sowie aus dem Abschnitt 12 zusammenfaellt. Dann wird die zweite Folge 8 so an den dritten Abschnitt 12 angehaengt, dass die Werte X zusammenfallen. Dann ist auch gewaehrleistet, dass die Werte h und J genau aufeinander folgen.

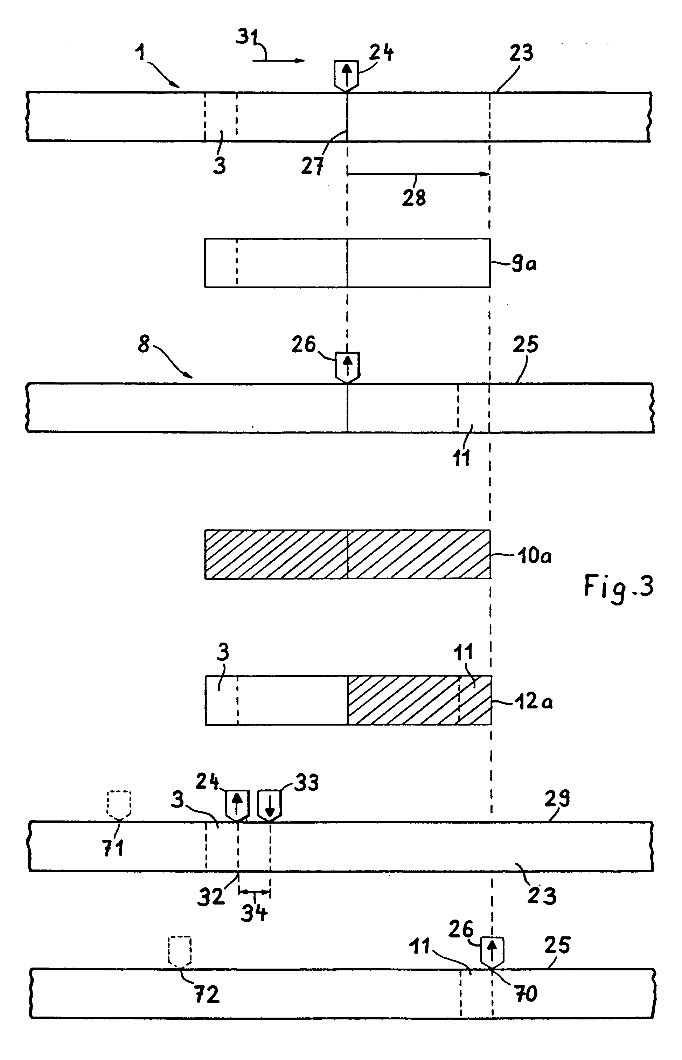

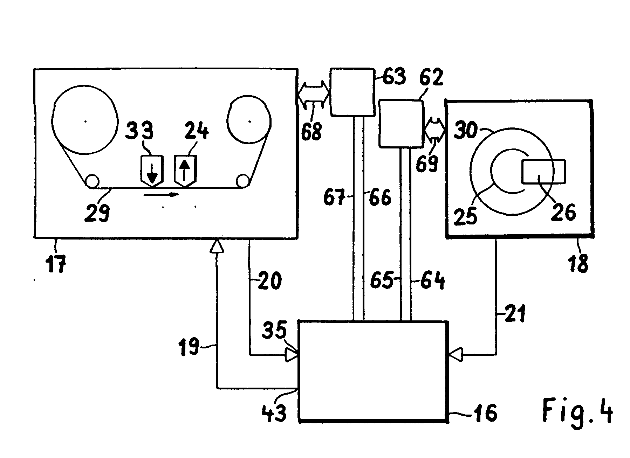

Figur 3 zeigt verschiedene Schritte eines weiteren Beispiels des Verfahrens zum Bearbeiten von Teilen von Folgen. Dieses Verfahren soll nachfolgend mit Hilfe der Figuren 1 bis 4 erlaeutert werden. Somit ist nachzutragen, dass Figur 4 eine Vorrichtung 16 zum Bearbeiten von Teilen einer Folge von Werten sowie ein Aufzeichnungs-und Wiedergabegeraet 17 fuer digitale Daten und ein Wiedergabegeraet 18 fuer digitale Daten oder Werte zeigt. Dabei sind auch Leitungen 19, 20 und 21 als Verbindungen zwischen diesen Geraeten 16, 17 und 18 vorgesehen.

Unter der Annahme, dass die erste und die zweite zu bearbeitende Folge von Werten wie sie aus der Figur 2 und der dazugehoerenden Beschreibung bekannt sind, auf einem Magnetband bzw auf einer Speicherplatte aufgezeichnet sind, kann dieses Verfahren, bei dem es darum geht, einen Teil der ersten Folge mit einem Teil der zweiten Folge zu verbinden nochmals nachvollzogen werden. Die erste Folge 1 sei dabei gemaess Figur 3 und 4 auf einer Spur 23 eines Aufzeichnungstraegers 29 aufgezeichnet, die von einem Lesekopf 24 gelesen werden kann. Ebenso ist die zweite Folge 8 auf einer Spur 25 auf einem Aufzeichnungstraeger 30 aufgezeichnet. Sie kann von einem Lesekopf 26 gelesen werden.

Zuerst wird nun das Ende der ersten Folge 1 markiert. Dazu liest der Lesekopf 24 (Fig. 4) des Geraetes 17 auf seinem Aufzeichnungstraeger 29 die Folge 1. Wenn beispielsweise durch Abhoeren der zu einem analogen Audio-Signal zurueckverwandelten Werte, das Ende an der Stelle 27 (Fig. 3) erkannt ist, kann das Lesen nach einer festen darauffolgenden Zeit, die durch die Strecke 28 angegeben ist, abgebrochen werden. Dabei ist vorauszusetzen, dass die gelesenen Werte laufend aus dem Lesekopf 24 ueber die Leitung 20 in einen nach dem FIFO Prinzip organisierten Speicher in der Vorrichtung 16 eingelesen werden, dessen Inhalt groesser ist, als die Anzahl Werte, die der Strecke 28 entsprechen. Das bedeutet, dass wenn das Lesen abgebrochen wird, auch Werte gespeichert sind, die der Stelle 27 (links davon) vorausgehen. Der FIFO-Speicher enthaelt dann Werte, die einen ersten Abschnitt 9a bilden.

Dann wird der Beginn des Teiles der zweiten Folge 8 ermittelt. Dazu wird die zweite Folge 8 auf de Spur 25 vom Lesekopf 26 gelesen und die Werte werden ueber die Leitung 21 (Figur 4) in einen FIFO-Speicher eingelesen. In entsprechender, eben beschriebener Weise wird dabei ein zweiter Abschnitt 10a gebildet. Es ist nachzutragen, dass beide Lesekoepfe 24 und 26 sich in Richtung eines Pfeiles 31 bewegen, relativ zur Spur 23, 25.

Die Werte aus den beiden Abschnitten 9a und 10a werden nun aus dem FIFO-Speicher in einen anderen Speicher eingelesen, mit Ausnahme derjenigen Werte des ersten Abschnittes 9a, die der Strecke 28 entsprechen. Fuer die Werte des zweiten Abschnittes 10a, gilt die Ausnahme fuer diejenigen Werte, die ausserhalb der Strecke 28 liegen. So entsteht der dritte Abschnitt 12a. Er enthaelt Werte aus der ersten Folge 1 bis zur Stelle 27 und der zweiten Folge 8 ab der gleichen Stelle (Fig. 3). Von den im FIFO-Speicher gespeicherten Werten die den dritten Abschnitt 12a bilden, werden eine bestimmte Zahl derjenigen Werte, die zuerst eingelesen wurden als erste Teilfolge 3 und eine bestimmte Zahl derjenigen Werte die zuletzt

3

eingelesen wurden als zweite Teilfolge 11 bezeichnet, beispielsweise indem deren Speicheradressen gesondert abgelegt werden. Somit liegt im FIFO-Speicher der dritte Abschnitt 12a bereit.

Um nun den dritten Abschnitt 12a an die erste Folge 1 anzuhaengen wird den Aufzeichnungstraeger 29 am Lesekopf 24 vorbeibewegt oder umgekehrt. Dabei werden in nun bekannter Weise laufend weitere Teilfolgen 4, 5, 6, 7 usw gebildet, die auch laufend mit der ersten Teilfolge 3 verglichen werden. Hat der Lesekopf 24 die Stelle bei 32 erreicht, so ist auch die Lage der ersten Teilfolge 3 auf dem Aufzeichnungstraeger 29 erkannt. Ueber einen Schreibkopf 33 kann sofort damit begonnen werden, einen Teil des Abschnittes 12a aus dem Speicher auf den Aufzeichnungstraeger 29 zu ueberschreiben. Dabei muss der Abstand 34 beruecksichtigt werden, der zwischen den beiden Koepfen 24 und 33 besteht. Das bedeutet, dass das Auslesen aus dem Speicher um eine bestimmte Anzahl Adressen verschoben ist, die dem Abstand 34 entspricht. Die Werte des dritten Abschnittes 12a werden so ueber die Leitung 19 aus der Vorrichtung 16 an das Geraet 17 abgegeben, das nun umgeschaltet wird auf Schreibbetrieb.

Jetzt muss noch zweite Folge 8 an den dritten Abschnitt 12a angeschlossen werden. Dazu wird der Lesekopf 26 in eine Wartestellung 70 am Ende der zweiten Teilfolge 11 laengs der Spur 25 gebracht. Dies geschieht auf die bereits beschriebene Art und Weise durch Erkennen der Teilfolge 11. Sobald der Schreibkopf 33 den letzten Wert des dritten Abschnittes 12a geschrieben hat, erhaelt er nun Werte vom Schreibkopf 26 zugefuehrt, so dass der Rest der zweiten Folge 8 an den dritten Abschnitt 12a angehaengt wird. Statt den Lesekopf 26 von der Stelle 70 aus zu starten, koennen auch beide Koepfe 24 und 26 beispielsweise ausgehend von Stellungen 71, 72 synchron bewegt werden. Der Lesekopf 26 sollte dabei voreilen. Der dadurch gegebene Abstand der Lesekoepfe 24 und 26 zueinander entspricht einer Datenmenge, die in einem Speicher laufend zwischengespeichert wird. Diese Datenmenge soll kleiner sein als die Datenmenge die den dritten Abschnitt 12a bildet. Dies ist aber spaeter noch genauer beschrieben.

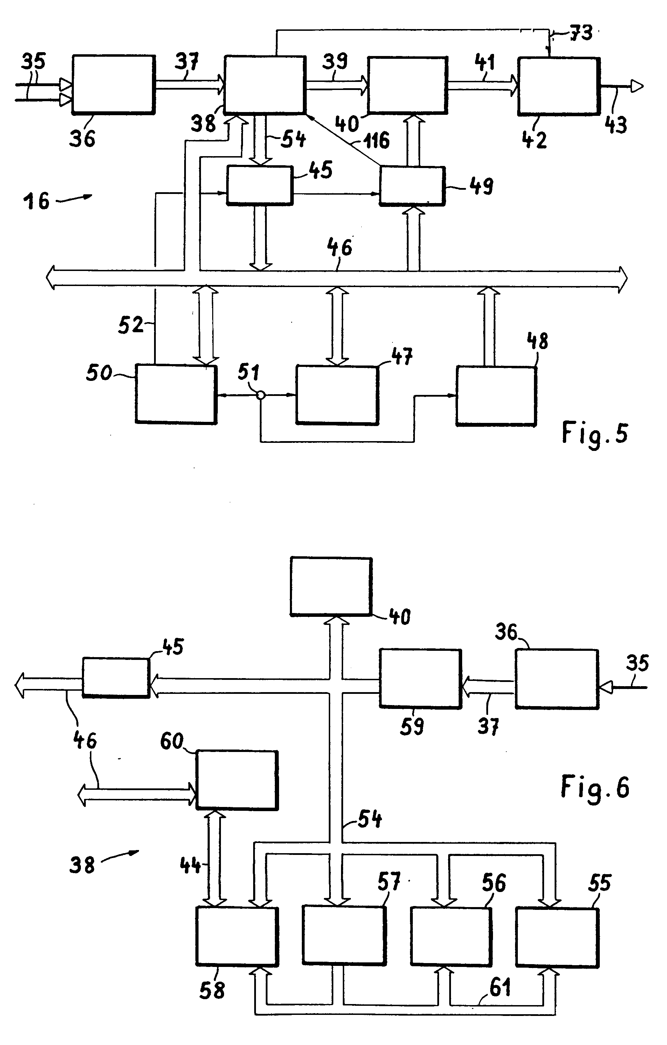

Figure 5 zeigt im wesentlichen die Vorrichtung 16 welche Eingange 35 fuer digitale Signale aufweist, in die die Leitungen 20 und 21 (Fig. 4) muenden. Diese sind an einen an sich bekannten AES/EBU-Demodulator 36, welcher die seriell eintreffenden Signale in Werte beispielsweise zu 16 Bit umwandelt, angeschlossen. Der Demodulator 36 ist ueber einen Bus 37 mit einem Detektor 38 verbunden, der wiederum ueber einen Bus 39 mit einem Multiplexer 40 verbunden ist. Ein weiterer Bus 41 verbindet den Multiplexer 40 mit einem AES/EBU/Modulator 42 bekannter Bauweise, welcher auch an einen Ausgang 43 der Vorrichtung 16 angeschlossen ist. Ueber einen Bus 54 ist der Detektor 38 auch an einen FIFO-Eingangs-Zwischenspeicher 45 angeschlossen. Dieser ist wiederum ueber einen Bus 46 mit einem RAM-Speicher 47, einem Prozessor 48 und einem FIFO-Ausgangs-Zwischenspeicher 49 verbunden. Eine Speichersteuerung 50 ist ueber Leitungen 51 und 52 mit dem RAM-Speicher 47 und den FIFO-Zwischenspeichern 45, 49 sowie mit dem Bus 46 verbunden. Die Zwischenspeicher 45 und 49 sind Speicher, deren Aufbau so ist, dass sie nach dem FIFO-Prinzip arbeiten. Dagegen besteht der Speicher 47 aus einem RAM das als FIFO organisiert ist und somit eine groessere Speicherkapazitaet aufweist.

Figur 6 zeigt, mit Ausnahme der Elemente 35, 36, 37, 40, 45 und 46, die bereits aus der Figur 5 bekannt sind, im wesentlichen den Aufbau des Detektors 38. Dieser umfasst einen Bus 54 an den ein FIFO-RAM-Speicher 55, ein PROM-Speicher 56, ein Prozessor 57, ein Lese/Schreib-Register 58, ein Bustreiber 59, der Multiplexer 40 und der FIFO-Eingangs-Zwischenspeicher 45 angeschlossen sind. Dabei sind die Register 58 auch ueber einen Bus 44 und eine Schnittstelle 60 an den Bus 46 angeschlossen. Die Elemente 55 bis 58 sind auch an einen Adressbus 61 angeschlossen.

Nachfolgend wird das Verfahren beschrieben, wie es mit Hilfe der Vorrichtung gemaess den Figuren 4 bis 6 durchgefuehrt wird.

Beim Lesen der Werte aus den Folgen 1 oder 8 von den Spuren 23 und 25 der beiden Aufzeichnungstraeger 29 und 30 werden die Werte aus dem Lesekopf 24, 26 ueber die Leitungen 20, 21, die Eingaenge 35 (Fig. 5), den AES/EBU-Demodulator 36, den Bus 37, den Detektor 38, und damit ueber den Bus 37 (Fig. 6), den Bustreiber 59, den Bus 54, den FIFO-Eingangs-Zwischenspeicher 45 (Fig. 5) und den Bus 46 in den RAM-Speicher 47 eingelesen, wo ihnen eine gewisse feste Verweilzeit zusteht. Diese entspricht etwa zweimal der Strecke 28 (Fig. 3) bzw. der Zeit die der Aufzeichnungstraeger braucht um diese Strecke zurueckzulegen. Im RAM-Speicher 47 werden die Abschnitte 9a und 10a getrennt abgelegt. Mit Hilfe geeigneter Programme fuer die Speichersteuerung 50, koennen Befehle ueber die Leitung 51 an den RAM-Speicher 47 abgegeben werden. So koennen Werte aus beiden Abschnitten 9a und 10a so zusammengestellt werden, dass ein dritter Abschnitt 12a entsteht. Auf diese Weise kann auch ein kontinuierlicher Uebergang (crossfade) zwischen den Folgen 1 und 8 erreicht werden. Dazu werden einfach alle Werte der Abschnitte 9a und 10a im Speicher 47 mit einer Folge von Faktoren multipliziert und anschliessend je zwei Produkte addiert, um den dritten Abschnitt 12a zu erzeugen.

Die erste und die zweite Teilfolge 3 und 11 aus dem dritten Abschnitt werden ermittelt, indem die Werte oder zumindest deren Speicheradressen, die bestimmten Speicherplaetzen im RAM-Speicher 47 zugeordnet sind, ueber den Bus 46 in den Speicher des Prozessors 48 uebergefuehrt werden.

Zum Anhaengen der Werte des dritten Abschnittes 12a an die Werte der Folge 1 muss der Inhalt des RAM-Speichers 47 mit den Werten der Spur 23 synchronisiert werden. Es ist bekannt, welcher Wert des dritten Abschnittes 12a aus dem RAM-Speicher 47 als erster in der Spur 23 aufgezeichnet werden soll. Dieser erste Wert wird ermittelt indem vom letzten Wert der ersten Teilfolge 3 ausgehend eine bestimmte Anzahl Speicherplaetze fuer Abtastwerte dazugezaehlt werden. Diese Anzahl entspricht genau dem Abstand 34 zwischen Schreib- und Lesekopf 24 und 33. Die Speicheradresse dieses ersten Wertes ist somit bekannt und der erste Wert kann, gefolgt von den weiteren Werten ueber den Bus 46, den Zwischenspeicher 49, den Multiplexer 40 und den Bus 41 bis in den Interpolator/Modulator 42 vorgeschoben werden. Dort wartet er.

Dann beginnt der Lesekopf 24 von einer Ausgangsposition 71 ausgehend zu lesen und die Werte ueber die Leitung 20, den Eingang 35 usw. in den Detektor 38 einzugeben, wo sie dem Prozessor 57 zugefuehrt werden. Dort findet der nun bekannte Vergleich statt zwischen Teilfolgen, die der Prozessor 57 aus laufend zugefuehrten Werten bildet und einer festen Teilfolge 3, die aus dem Speicher 47 ueber den Bus 46, das Interface 60, den Bus 44, das Register 58 und den Bus 54 dem Prozessor 57 zugefuehrt wird. Der Detektor 38 gibt ueber eine Leitung 73 den Interpolator/Modulator 42 frei, wenn die Teilfolge erkannt ist, so dass dieser die vorbereiteten Werte ueber den Ausgang 43 und die Leitung 19 an den Schreibkopf 33 weitergeben kann, der die Werte des dritten Abschnittes 12a aufzeichnet.

Wenn die vorgehend beschriebenen Vorgaenge ablaufen, wird auch der Lesekopf 26 des Geraetes 18, beispielsweise ausgehend von einer Ausgangsposition 72 laengs der Spur 25 gestartet und vorzugsweise so mit der Bewegung des Schreibkopfes 33 des Aufzeichnungs-und Wiedergabegeraetes 17 synchronisiert, dass der Lesekopf 26 voreilt. Diese Synchronisierung erfolgt auf an sich bekannte Weise mit Hilfe von Synchronisatoren 62 und 63 (Fig. 4), die ueber je einen Bus 68 und 69 mit je einem der Geraete 17 und 18 verbunden sind. Die Synchronisatoren sind ebenfalls ueber Leitungen 64 bis 67 mit der Vorrichtung 16 verbunden zum Austausch von Zeitcodeangaben und weiteren Steuerinformationen und Befehlen. Dabei kann die Geschwindigkeit fuer beide Koepfe 26 und 33 genau eingehalten werden. Deren relativer Abstand ist aber bestimmt. Die Werte, die der Lesekopf 26 empfaengt, werden ueber die Leitung 21, einen Eingang 35 usw. in den Detektor 38 und dort in den FIFO-RAM-Speicher 55 geleitet. Aus diesem werden laufend Teilfolgen entnommen und ueber den Bus 54 dem Prozessor 57 zugefuehrt. Aus dem Speicher 47 erhaelt dieser auf bekanntem Wege ueber das Register 58 nun die Teilfolge 11 angelegt. So kann er diese mit den laufend gebildeten Teilfolgen vergleichen. Hat der Lesekopf 26 die Stellung 70 erreicht, so ist die zweite Teilfolge auf dem Aufzeichnungstraeger bzw. dessen Spur 25 erkannt und es wird der erste Wert der zweiten Folge 8 im Speicher markiert. Dabei werden zunaechst immer noch darin gespeicherte Werte des dritten Abschnittes 12a aus dem Speicher 55 ausgelesen und auf die Spur 23 aufgezeichnet. Sobald keine Werte des dritten Abschnittes 12a mehr darin gespeichert sind, d.h. wenn der markierte Wert im Zwischenspeicher 49 eintrifft, werden diejenigen Werte, die aus der Spur 25 stammen ab diesem markierten Wert ausgelesen und in der Spur 23 aufgezeichnet. Dies geschieht auf ein Signal, das der Zwischenspeicher 49 ueber eine Leitung 116 an den Detektor 38 abgibt. So ist es moeglich diesen Uebergang ohne Verlust an Werten und ohne Unterbruch durchzufuehren.

Beim Vergleich zweier Teilfolgen miteinander sind wir bisher davon ausgegangen, dass absolute Uebereinstimmung zwischen den einzelnen Werten der beiden Teilfolgen erreicht wird. Es kann aber vorkommen, dass ein Wert einer Teilfolge ploetzlich fehlt oder fehlerhaft ist. Trotzdem stimmt die vorliegende Teilfolge besser mit der Referenzteilfolge ueberein als alle anderen geprueften Teilfolgen. So waere es schade gerade diese Teilfolge als nicht uebereinstimmend zu kennzeichnen. Es kann deshalb auch ein Index definiert werden, der die relative Uebereinstimmung zweier Teilfolgen bewertet. Es kann auch ein Schwellwert fuer den Index vorgegeben werden, der die Grenze angibt, ab welcher eine relative Uebereinstimmung zu einer absoluten Uebereinstimmung angerechnet wird. Zur Berechnung eines solchen Index I kann folgende Formel verwendet werden:

$$I = 1 - \frac{\displaystyle\sum_{i=0}^{slen-1} \left| s(i) - d(i) \right|}{slen - E(\ diff\ )}$$

wobei

s(i) den i-ten Wert der Referenzteilfolge,

d(i) den i-ten Wert der vorliegenden Teilfolge,

slen die Laenge der Referenzteilfolge und

E (diff) der Erwartungswert der Summe im Zaehler

bedeuten.

**Patentansprüche**

1. Verfahren zum Aneinanderfügen von zwei digitalisierten Audiosignalen, die als erste und zweite Folgen (1, 8) von Werten auf je einem Aufzeichnungsträger (23, 25) aufgezeichnet sind, unter Verwendung eines Zwischenspeichers, dadurch gekennzeichnet, dass

in der ersten Folge (1) von Werten eine erste Teilfolge (3), die das Ende der ersten Folge markiert, und in einer zweiten Folge (8) von Werten eine zweite Teilfolge (11), die den Anfang der zweiten Folge markiert, ermittelt wird, dass

ein erster, die erste Teilfolge enthaltender Abschnitt (9, 9a) aus dem Endbereich der ersten Folge (1) und ein zweiter, die zweite Teilfolge enthaltender Abschnitt (10, 10a) aus dem Anfangsbereich der zweiten Folge (8) zusätzlich in einem Speicher gespeichert werden, dass

Werte aus dem ersten und zweiten Abschnitt ohne Zwischenraum im Speicher zu einem dritten Abschnitt (12, 12a), der einen Uebergangsbereich bildet, aneinandergefügt werden und dass

der dritte Abschnitt zwischen den beiden Folgen eingefügt wird,

wobei das Anfügen des dritten Abschnitts an die erste Folge mit Hilfe eines Vergleichs der ersten Teilfolge mit Teilfolgen der ersten Folge synchronisiert wird und wobei

das Anfügen der zweiten Folge an den dritten Abschnitt mit Hilfe eines Vergleichs der zweiten Teilfolge mit Teilfolgen der zweiten Folge synchronisiert wird.

2. Vorrichtung zur Durchführung des Verfahrens nach Anspruch 1, gekennzeichnet durch,

Mittel, um in der ersten Folge (1) von Werten eine erste Teilfolge (3), die das Ende der ersten Folge markiert, und in einer zweiten Folge (8) von Werten eine zweite Teilfolge (11), die den Anfang der zweiten Folge markiert zu ermitteln, durch

Mittel, um einen ersten, die erste Teilfolge enthaltenden Abschnitt (9, 9a) aus dem Endbereich der ersten Folge (1) und einen zweiten, die zweite Teilfolge enthaltenden Abschnitt (10, 10a) aus dem Anfangsbereich der zweiten Folge (8) zusätzlich in einem Speicher zu speichern, durch

Mittel, um Werte aus dem ersten und zweiten Abschnitt ohne Zwischenraum im Speicher zu einem dritten Abschnitt (12, 12a), der einen Uebergangsbereich bildet, aneinanderzufügen und

den dritten Abschnitt zwischen den beiden Folgen einzufügen,

wobei das Anfügen des dritten Abschnitts an die erste Folge mit Hilfe eines Vergleichs der ersten Teilfolge mit Teilfolgen der ersten Folge synchronisiert wird und wobei

das Anfügen der zweiten Folge an den dritten Abschnitt mit Hilfe eines Vergleichs der zweiten Teilfolge mit Teilfolgen der zweiten Folge synchronisiert wird.

**Claims**

1. Method for joining together two digitized audio signals recorded as first and second sequences (1, 8) of values on in each case one record support (23, 25) using a buffer store, characterized in that in the first sequence (1) of values is defined a first partial sequence (3), which marks the end of the first sequence, and in a second sequence (8) of values is determined a second partial sequence (11), which marks the start of the second sequence, that a first segment (9, 9a) from the end region of the first sequence and containing the first partial sequence and a second segment (10, 10a) from the starting region of the second sequence (8) containing the second partial sequence are additionally stored in a store, that values from the first and second segments, without a space, are joined together in the memory to a third segment (12, 12a) forming a transition region and that the third segment is inserted between the two sequences, the joining of the third segment to the first sequence being synchronized with the aid of a comparison of the first partial sequence with partial sequences of the first sequence and in which the joining of the second sequence to the third segment is synchronized with the aid of a comparison of the second partial sequence with partial sequences of the second sequence.

2. Apparatus for performing the method according to claim 1, characterized by means for determining in the first sequence (1) of values a first partial sequence (3) marking the end of the first sequence and in a second sequence (8) of values a second partial sequence (11) marking the start of the second sequence, by means for additionally storing in a store a first segment (9, 9a) from the end region of the first sequence (1) containing the first partial sequence and a second region (10, 10a) from the starting region of the second sequence (8) containing the second partial sequence, by means for joining values from the first and second segments, without space, in the store to a third segment (12, 12a), which forms a transition region and inserting the third segment between the two sequences, in which the joining of the third segment to the first sequence is synchronized with the aid of a comparison of the first partial sequence with partial sequences of the first sequence and in which the joining of the second sequence to the third segment is synchronized with the aid of a comparison of the third partial sequence with partial sequences of the second sequence.

**Revendications**

1. Procédé pour assembler deux signaux audio numérisés qui sont enregistrés en tant que première et seconde séquences (1,8) de valeurs, chacun sur un support d'enregistrement (23,25) avec utilisation d'une mémoire intermédiaire, caractérisé en ce que :

   on détecte dans la première séquence (1) de valeurs, une première séquence partielle (3) qui marque la fin de la première séquence, et, dans une seconde séquence (8) de valeurs, une seconde séquence partielle (11) qui marque le début de la seconde séquence,

   un premier segment (9,9a), pris dans la région terminale de la première séquence (1) et contenant la première séquence partielle et un second segment (10,10a) pris dans la région initiale de la seconde séquence (8) et contenant la seconde séquence partielle, sont mémorisés en supplément dans une mémoire,

   des valeurs prises dans le premier et second segments sont assemblées sans espacement intercalaire dans la mémoire pour former un troisième segment (12,12a) qui forme une région de transition, et

   le troisième segment est inséré entre les deux séquences,

   l'addition du troisième segment à la première séquence étant synchronisée à l'aide d'une comparaison entre la première séquence partielle et des séquences partielles de la première séquence, et

   l'addition de la seconde séquence au troisième segment est synchronisée à l'aide d'une comparaison entre la seconde séquence partielle et des séquences partielles de la seconde séquence.

2. Dispositif pour la mise en oeuvre du procédé selon la revendication 1, caractérisé par :

   des moyens servant à détecter, dans la première séquence (1) de valeurs, une première séquence partielle (3) qui marque la fin de la première séquence et, dans une seconde séquence (8) de valeurs, une seconde séquence partielle (11) qui marque le début de la seconde séquence,

   des moyens servant à mémoriser en supplément dans une mémoire un premier segment (9,9a) pris dans la région terminale de la première séquence (1) et contenant la première séquence partielle et un second segment (10,10a) pris dans la région initiale de la seconde séquence (8) et contenant la deuxième séquence partielle,

   des moyens servant à assembler des valeurs prises dans les premier et second segments sans espacement intercalaire dans la mémoire pour former un troisième segment (12,12a) qui forme une région de transition, et

   l'insertion du troisième segment entre les deux séquences,

   l'addition du troisième segment à la première séquence étant synchronisée à l'aide d'une comparaison entre la première séquence partielle et des séquences partielles de la première séquence, et

   l'addition de la seconde séquence au troisième segment étant synchronisée à l'aide d'une comparaison entre la seconde séquence partielle et des séquences partielles de la seconde séquence.

Fig. 1

Fig.2

Fig.3

Fig.4

Fig.5

Fig.6